(19) Europäisches Patentamt / European Patent Office / Office européen des brevets

(11) **EP 3 728 740 B1**

(12) **FASCICULE DE BREVET EUROPEEN**

(45) Date de publication et mention
de la délivrance du brevet:
**15.02.2023 Bulletin 2023/07**

(21) Numéro de dépôt: **18833961.8**

(22) Date de dépôt: **18.12.2018**

(51) Classification Internationale des Brevets (IPC):
***E02D 1/00*** (1968.09)

(52) Classification Coopérative des Brevets (CPC):
**E02D 3/02; E02D 1/02; E02D 3/046; G01B 9/02**

(86) Numéro de dépôt international:
**PCT/FR2018/053359**

(87) Numéro de publication internationale:
**WO 2019/122675 (27.06.2019 Gazette 2019/26)**

(54) **PROCÉDÉ DE COMPACTAGE DE SOL UTILISANT UN SCANNER LASER**

VERFAHREN ZUR BODENVERDICHTUNG UNTER VERWENDUNG EINES LASERS ZUR BILDERFASSUNG

METHOD OF CAMPACTING A SOIL USING A LASER SCANNER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1762737**

(43) Date de publication de la demande:
**28.10.2020 Bulletin 2020/44**

(73) Titulaire: **Soletanche Freyssinet**
**92500 Rueil Malmaison (FR)**

(72) Inventeurs:
• **QUANDALLE, Benoit**
**92500 RUEIL MALMAISON (FR)**
• **BUNIESKI, Simon**
**92500 RUEIL MALMAISON (FR)**

(74) Mandataire: **Cabinet Beau de Loménie**
**Immeuble Eurocentre**
**179 Boulevard de Turin**
**59777 Lille (FR)**

(56) Documents cités:
**CN-A- 103 471 541    CN-A- 107 237 310**
**FR-A1- 2 629 846    JP-A- H1 161 792**

## Description

Arrière-plan de l'invention

La présente invention concerne le domaine de l'amélioration de sol, et plus précisément celui du compactage de sol.

Parmi les procédés de compactage de sol, on connaît la technique de compactage dynamique, qui consiste à pilonner le sol en réalisant des impacts successifs à haute énergie sur une portion de sol prédéterminée afin de densifier les couches compressibles du sol.

Traditionnellement, le pilonnage consiste à laisser tomber plusieurs fois au même endroit une masse de compactage, en générale comprise entre 5 et 40 tonnes, depuis une hauteur comprise entre 5 et 40 mètres.

La présente invention inclut également la technique de remplacement dynamique, également connue sous le nom de « plots ballastés ». Cette technique diffère du compactage dynamique par le fait qu'un volume de cailloux est disposé sur la zone d'impact de la masse avant certains impacts, notamment par exemple avant le premier impact, en cours de pilonnage. La zone d'impact peut avoir été excavée au préalable si nécessaire avant le premier impact afin de recevoir tout ou partie du volume de cailloux.

Habituellement, on définit sur le sol un maillage de zones d'impact. Sur chaque zone d'impact on réalise une séquence de pilonnage comportant généralement plusieurs cycles de pilonnage. Chaque séquence de pilonnage comprend généralement entre 2 et 40 cycles de pilonnage.

Depuis des années, le suivi de l'efficacité du compactage en cours d'exécution se fait essentiellement à partir de l'évolution de la pénétration de la masse dans le sol. Cette pénétration peut être déterminée à l'issue de chaque cycle de pilonnage par la longueur de déroulement du câble à l'extrémité duquel est fixée la masse.

Ce critère est toutefois imparfait. Par exemple, dans des sols plutôt fins, on pourra noter une pénétration importante sans amélioration du sol car le sol aura simplement été déplacé vers le haut sur la périphérie de l'empreinte de l'impact.

Une autre façon de tenter de déterminer un nombre d'impacts optimal est de réaliser un test de pénétration en début de chantier. Il consiste à mesure le volume d'enfoncement de l'empreinte et celui du soulèvement périphérique, au moyen de piquets servant de repères d'altimétrie et plantés radialement selon trois axes, et en assimilant l'empreinte et le volume de soulèvement périphérique à des formes géométriques simples.

Ce protocole est toutefois lent et imprécis. Par ailleurs, il est incompatible avec une utilisation à chaque cycle de pilonnage, c'est-à-dire à chaque lâché de masse.

Le document FR 2 629 846 propose d'équiper la masse avec un accéléromètre afin de déterminer des données caractéristiques du sol.

De telles mesures d'accélération, notamment au moment de l'impact sont intéressantes mais ne permettent pas à elles seules de caractériser correctement le compactage du sol.

Le document CN 107 237 310 A divulgue un procédé et une machine selon le préambule de la revendication 1 et de la revendication 17 respectivement.

Objet et résumé de l'invention

Un but de la présente invention est de proposer un procédé de compactage d'un sol, permettant de caractériser le compactage du sol de façon plus fiable au cours de la mise en oeuvre dudit procédé.

Pour ce faire, l'invention porte sur un procédé de compactage d'un sol, dans lequel :

a) on réalise plusieurs fois un cycle de pilonnage d'une zone d'impact du sol au cours duquel:

on laisse tomber une masse sur la zone d'impact depuis une hauteur prédéterminée ; et après l'impact de la masse sur la zone d'impact, on acquiert un nuage de points à l'aide d'un scanner laser afin d'obtenir une image radar d'au moins l'empreinte de la masse dans le sol ;

b) on détermine au moins une donnée caractéristique du compactage du sol à partir d'au moins une des images radar obtenues à l'issue des cycles de pilonnage.

Par empreinte, on entend le cratère ou la dépression formée dans le sol après l'impact de la masse sur le sol.

On comprend donc que, selon l'invention, on laisse tomber plusieurs fois la masse au même endroit sur la même zone d'impact.

On comprend que le scanner laser réalise un balayage de la zone d'impact, incluant l'empreinte et le soulèvement de sol autour de l'empreinte. L'image radar est donc constituée d'un nuage de points.

A partir de l'image radar et/ou du nuage de points, un traitement informatique, mettant en oeuvre des algorithmes connus par ailleurs, permet de reconstituer la surface de la zone d'impact. Il est alors possible de comparer ladite surface aux surfaces correspondant aux impacts précédemment réalisés, ou bien à une surface de référence. Cette surface de référence peut par exemple être constituée par la surface du sol avant le premier cycle de pilonnage de la séquence.

Les algorithmes permettent également de calculer le volume de l'empreinte, ainsi que le volume du soulèvement périphérique, à partir de l'image radar.

Par données caractéristiques du compactage du sol, on entend des données qui permettent d'apprécier le niveau du compactage du sol, c'est-à-dire l'augmentation de la densité du sol. Comme cela sera précisé ci-dessous, la donnée caractéristique peut être, par exemple mais non exclusivement, la profondeur ou le volume de l'empreinte, le volume de soulèvement autour de l'empreinte ou bien des fonctions mathématiques combinant les valeurs précitées.

Grâce à l'invention, il est alors possible de suivre l'évolution de ces paramètres au cours des cycles de pilonnage, ce qui permet d'apprécier « en temps réel », le niveau de compactage.

Par scanner laser, on entend un dispositif permettant de réaliser une télédétection par laser, généralement dénommé « LIDAR - Light Détection And Ranging », connu par ailleurs, et permettant de reconstituer des environnements, telle une surface de sol, par acquisition d'un nuage de points.

Selon l'invention, on peut déterminer une ou plusieurs données caractéristiques à l'issue de l'ensemble des cycles de pilonnage, c'est-à-dire à partir de tout ou partie des images radar acquises au cours de la séquence de pilonnage.

Selon un mode de réalisation préférentiel, on détermine ladite au moins une donnée caractéristique du compactage du sol à l'issue de chaque cycle de pilonnage. Cela permet à l'opérateur de connaître la valeur de la donnée caractéristique de compactage du sol à chaque cycle de la séquence de pilonnage.

Cette information peut le conduire à modifier l'énergie d'impact, par exemple en modifiant la hauteur prédéterminée, ou bien mettre un terme à la séquence de pilonnage. Autrement dit, l'invention permet d'assister efficacement l'opérateur dans le pilotage de la machine de pilonnage.

Avantageusement, on détermine l'évolution de ladite au moins une donnée caractéristique du compactage du sol au cours des cycles de pilonnage.

Un intérêt est de permettre à l'opérateur de suivre l'évolution de la donnée caractéristique à chaque cycle. Il peut ainsi décider d'arrêter la séquence, ou bien la poursuivre, en fonction de la donnée caractéristique ou bien en fonction de son évolution, matérialisée par une courbe qui pourra être affichée sur un écran mis à disposition de l'opérateur.

Avantageusement, ladite au moins une donnée caractéristique du compactage du sol est une profondeur de l'empreinte.

Cette profondeur est calculée grâce au traitement mathématique de l'image radar de la zone d'impact. De préférence, la profondeur calculée pourra être la profondeur maximale de l'empreinte.

Avantageusement ladite au moins une donnée caractéristique du compactage du sol est un volume de soulèvement du sol autour de l'empreinte.

Là-encore, le volume de soulèvement du sol autour de l'empreinte est déterminé par calcul à partir de l'image radar de la zone d'impact. Le volume de soulèvement est préférentiellement calculé à partir de la surface du sol reconstituée à partir d'un nuage de points issu de l'image radar. Encore de préférence, mais non exclusivement, le volume de soulèvement est calculé en comparant la surface de la zone d'impact par rapport à la surface de référence. Comme mentionné ci-dessus, cette surface de référence est par exemple obtenue à partir d'une image radar du sol acquise avant le premier impact sur le sol.

Il convient de préciser que le volume de soulèvement peut être une valeur négative. Dans ce cas, il s'agit d'un volume d'affaissement.

Avantageusement, ladite au moins une donnée caractéristique du compactage du sol est un volume de l'empreinte.

De façon similaire, le volume de l'empreinte est déterminé par calcul à partir de l'image radar de la zone d'impact. Le volume de l'empreinte est préférentiellement calculé à partir de la surface du sol reconstituée à partir d'un nuage de points issu de l'image radar. Encore de préférence, mais non exclusivement, le volume de l'empreinte est calculé en comparant à la surface de référence précitée.

Sans sortir du cadre de la présente invention, on détermine à l'issue de chaque cycle, deux ou trois données caractéristiques prises par exemple parmi, la profondeur de l'empreinte, le volume de l'empreinte, et le volume de soulèvement.

Avantageusement, on stoppe la répétition des cycles de pilonnage lorsque ladite au moins une donnée caractéristique du compactage du sol a atteint un seuil prédéterminé.

Alternativement, l'arrêt de la séquence peut être effectué si ce seuil prédéterminé est franchi à la hausse ou à la baisse.

Le seuil prédéterminé pourra être déterminé, avant le commencement de la séquence de pilonnage, à partir des caractéristiques du sol que l'on souhaite obtenir à l'issue des opérations de compactage.

Selon un mode de mise en oeuvre préférentiel, on détermine, à l'issue de chaque cycle de pilonnage, une première donnée caractéristique du compactage du sol et une deuxième donnée caractéristique du compactage du sol.

Sans sortir du cadre de la présente invention, et comme expliqué ci-dessus, un nombre de données caractéristiques du compactage du sol supérieur à deux peut être déterminé à l'issue de chaque cycle de pilonnage.

Notamment, mais pas exclusivement, les première et deuxième données caractéristiques peuvent être prises parmi les données évoquées ci-dessus, à savoir la profondeur de l'empreinte, le volume de l'empreinte, ou bien encore le volume de soulèvement.

Avantageusement, on détermine une valeur caractéristique du compactage du sol à partir des première et deuxième données caractéristiques du compactage du sol.

Cette valeur caractéristique du compactage du sol est une fonction mathématique des première et deuxième données caractéristiques du compactage du sol.

Sans sortir du cadre de la présente invention, plusieurs valeurs caractéristiques du compactage du sol pourraient être déterminées à l'issue de chaque cycle, à partir des mêmes ou d'autres données caractéristiques que les première et deuxième données précitées.

Un intérêt de calculer une valeur caractéristique à partir de la combinaison de plusieurs données caractéristiques est de pouvoir quantifier plus précisément le compactage du sol.

Avantageusement, on détermine l'évolution, au cours des cycles de pilonnage, de la valeur caractéristique du compactage du sol.

Un intérêt est de pouvoir suivre l'évolution de la valeur caractéristique du compactage du sol, et de modifier si nécessaire le déroulement de la séquence de pilonnage.

Avantageusement, on stoppe la répétition des cycles de pilonnage lorsque la valeur caractéristique du compactage du sol a atteint un seuil de compactage prédéterminé.

A l'instar du seuil précité, le seuil de compactage prédéterminé pourra être déterminé, avant le commencement de la séquence de pilonnage, par exemple en fonction de la densité du sol que l'on souhaite obtenir à l'issue des séquences de pilonnage.

Selon un mode de mise en oeuvre préférentiel, mais non exclusif, la valeur caractéristique du compactage du sol est la différence entre la première donnée caractéristique du compactage du sol et la deuxième donnée caractéristique du compactage du sol.

Sans sortir du cadre de la présente invention, d'autres combinaisons ou fonctions mathématiques peuvent être choisies pour déterminer la valeur caractéristique du compactage du sol.

Selon un mode de mise en oeuvre préférentiel, la première donnée caractéristique du compactage du sol est le volume de l'empreinte, tandis que la deuxième donnée caractéristique du compactage du sol est le volume de soulèvement du sol autour de l'empreinte.

La différence entre le volume de l'empreinte et le volume de soulèvement est appelé volume effectif.

Le suivi de l'évolution du volume effectif permet de quantifier de manière relativement précise le niveau de compactage du sol.

On suit avantageusement l'évolution du volume effectif au cours des cycles de pilonnage, et on stoppe la séquence lorsque le volume effectif a atteint un seuil de compactage prédéterminé.

Ce seuil de compactage prédéterminé pourra être celui pour lequel la pente de la courbe matérialisant l'évolution de la valeur caractéristique est égale à un coefficient prédéterminé. Un intérêt est de pouvoir stopper la séquence de pilonnage lorsque la valeur caractéristique a atteint un plateau.

Grâce à l'invention, on effectue le nombre nécessaire et suffisant de cycles de pilonnage, ce qui permet d'améliorer la vitesse d'exécution des opérations de compactage et d'en diminuer les coûts.

En outre, en présence d'un sol hétérogène, l'invention permet d'effectuer des nombres de cycles de pilonnage qui pourront être différents d'une zone d'impact à une autre. Un intérêt est de s'adapter à la structure d'un terrain hétérogène à densifier, ce qui permet d'optimiser de façon globale les opérations de compactage.

Avantageusement, la hauteur prédéterminée est déterminée à partir de ladite au moins une donnée caractéristique du compactage du sol.

On comprend donc que le procédé selon l'invention permet d'ajuster l'énergie d'impact en cours de séquence de pilonnage pour s'adapter à la structure du sol à compacter.

De façon préférentielle, lors de l'étape a), l'acquisition de l'image radar est réalisée lors de la remontée de la masse ou lorsque la masse a atteint la hauteur prédéterminée.

On profite ainsi de la durée de remontée de la masse pour réaliser l'acquisition d'image, et aussi de préférence pour déterminer ladite au moins une donnée caractéristique. Ce processus en temps masqué a pour effet avantageux de ne pas rallonger la durée des séquences de pilonnage.

De préférence, l'acquisition de l'image radar est effectuée lorsqu'il a été détecté que la masse sort du champ de vision du scanner laser.

Avantageusement, l'image radar est une image radar tridimensionnelle. Un intérêt est de pouvoir déterminer plus facilement le volume de l'empreinte et/ou le volume de soulèvement.

Selon une variante de mise en oeuvre, on place des cailloux sur le sol avant de débuter le cycle de pilonnage, ce qui permet de réaliser des plots ballastés dans le sol.

La présente invention porte également sur une machine pour la mise en oeuvre du procédé selon l'invention, ladite machine comportant un mât, une masse suspendue au mât, un dispositif pour remonter la masse après l'impact de la masse sur une zone d'impact du sol, et un scanner laser configuré pour acquérir un nuage de points afin d'obtenir une image radar d'au moins la zone d'impact.

On comprend que la zone d'impact inclut l'empreinte et le soulèvement de sol autour de l'empreinte. Le soulèvement de sol et l'empreinte pourront être définis par rapport à une surface de référence, par exemple correspondant à la surface du sol avant le premier impact.

La machine pourra également comprendre un porteur, du type à chenilles, afin de déplacer la masse.

Le dispositif pour remonter la masse comporte de préférence un câble, attaché à la masse, et actionné par un enrouleur disposé sur la machine.

Selon l'invention, la masse pourra être lâchée en étant fixée ou non au câble. Dans le cas où la masse est lâchée tout en restant fixée au câble, on comprend que l'on prévoit suffisamment du mou pour éviter que la tension du câble ne freine la chute de la masse.

Selon un premier mode de réalisation, le scanner laser est monté sur le mât.

Aussi, grâce à l'invention, le scanner laser peut être facilement monté sur tout type de machine de levage.

Le scanner laser étant disposé en hauteur sur le mât, il peut prendre une image de dessus de la zone d'impact, ce qui permet de déterminer plus précisément le volume de l'empreinte et du volume de soulèvement.

De préférence, mais pas exclusivement, le scanner laser est un scanner 2D monté pivotant par rapport au mât selon un axe de rotation horizontal.

Le pivotement autour de l'axe de rotation horizontal permet de réaliser un balayage dans une dimension supplémentaire, grâce à quoi on obtient une image tridimensionnelle.

Selon un autre mode de réalisation, la machine selon l'invention comporte en outre un drone équipé du scanner laser.

Un intérêt d'utiliser un drone est de mettre en oeuvre plus rapidement le procédé selon l'invention, en évitant l'étape de montage du scanner laser au mât.

Sans sortir du cadre de la présente invention, le scanner laser pourrait être un laser 3D.

Brève description des dessins

L'invention sera mieux comprise à la lecture de la description qui suit d'un mode de mise en oeuvre de l'invention donné à titre d'exemple non limitatif, en référence aux dessins annexés, sur lesquels :

- la figure **1** illustre le procédé de compactage selon l'invention, la masse étant en position relevée ;
- la figure **2** illustre le premier impact dans le sol et la formation d'une empreinte dans le sol;
- la figure **3** illustre la remontée de la masse ;
- la figure **4** illustre l'acquisition de l'image radar de l'empreinte de la masse dans le sol,
- les figures **5A** à **5C** schématisent l'évolution de la zone d'impact après deux cycles de pilonnage ;
- la figure **6** est une vue en coupe de la zone d'impact, prise dans un plan vertical ;
- la figure **7** est un exemple de surface générée à partir d'une image radar acquise à l'issue d'un cycle de pilonnage ;
- la figure **8** est un exemple de nuages de points issus d'une image radar ;
- la figure **9** est une courbe montrant l'évolution du volume de l'empreinte, du volume de soulèvement et du volume effectif au cours des cycles de pilonnage ;
- les figures **10A** et **10B** illustrent un premier mode de réalisation de la machine de compactage selon l'invention dans lequel le scanner laser est monté sur le mât de la machine ; et
- la figure **11** illustre un second mode de réalisation de la machine de compactage selon l'invention dans lequel le scanner laser est monté sur un drone.

Description détaillée de l'invention

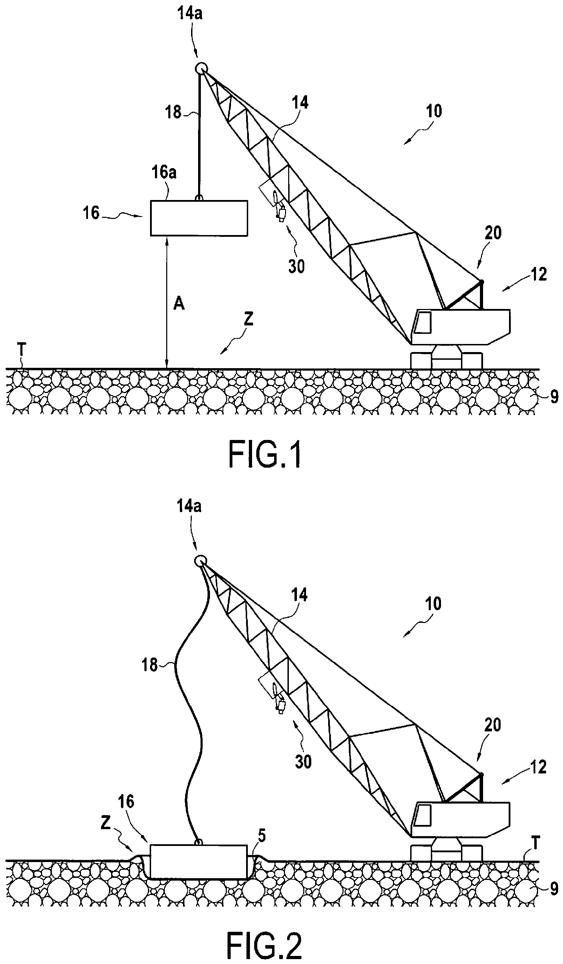

Sur les figures **1** à **4,** on a illustré une machine **10** pour la mise en oeuvre d'un procédé de compactage d'un sol **9,** conforme à la présente invention. Cette machine **10** comporte un porteur à chenilles **12** muni d'un mât **14.** La machine **10** comporte par ailleurs une masse **16** dont la face supérieure **16a** est fixée à l'extrémité d'au moins un câble **18.** Comme on l'a schématisé sur la figure **1,** le câble **18** passe par la flèche **14a** du mât **14.** Un effort de traction peut être exercé sur le câble **18** à l'aide du dispositif de levage **20** disposé sur le porteur **12.**

Dans cet exemple non limitatif, la masse pèse environ 25 tonnes, et la machine **10** est configurée pour amener la masse à une hauteur prédéterminée **A** comprise entre 5 et 30 mètres.

La machine **10** est configurée pour laisser tomber la masse **16** sur le sol **9.** Pour ce faire, on relâche la tension exercée sur le câble **18,** ce qui provoque la chute de la masse **16** sur le sol depuis la hauteur prédéterminée **A.** Le câble relâché suit la masse **16** dans sa chute sans toutefois la freiner.

Sur la figure **1,** on a illustré le sol **9** avant compactage, sa surface **T** étant sensiblement horizontale. Cette surface **T** constitue une surface de référence.

Les figures **1** à **4** illustrent un cycle de pilonnage d'une séquence de pilonnage au cours duquel on laisse tout d'abord tomber la masse **16** sur une zone du sol, dénommée zone d'impact **Z,** depuis la hauteur prédéterminée **A.** On comprend que la masse **16** est lâchée à plusieurs reprises depuis une position prédéterminée afin de pilonner plusieurs fois la zone d'impact **Z.**

L'impact de la masse **16** sur la zone d'impact du sol **9** a pour effet de former un cratère ou une empreinte **E** dans le sol **9** et, le plus souvent, une zone de soulèvement **S** située autour de l'empreinte **E.** Il est à noter que la périphérie de l'empreinte peut également présenter des zones d'affaissement.

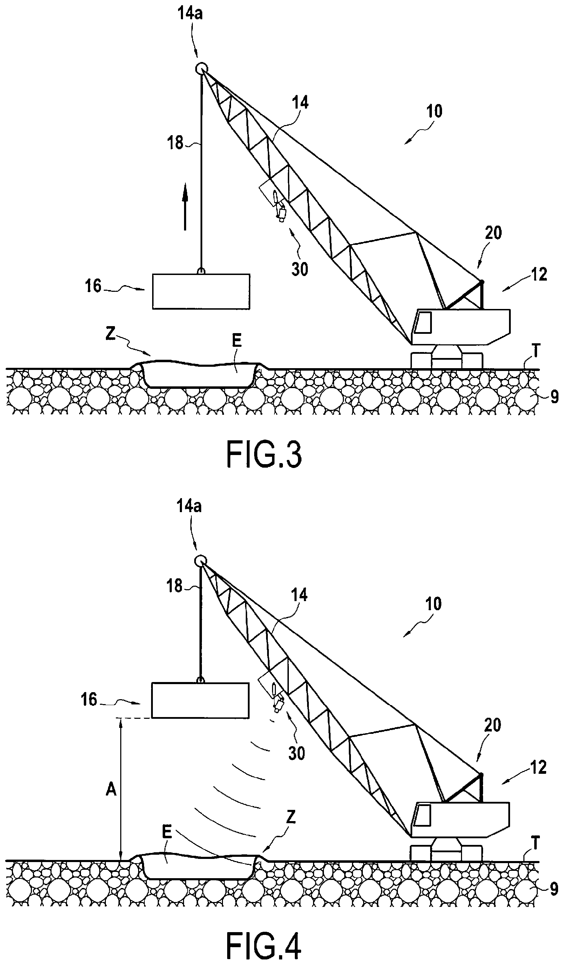

Comme illustré sur la figure **3,** après l'impact de la masse **16** sur le sol **9,** on remonte la masse **16** en actionnant le dispositif de levage **20,** qui provoque une traction sur le câble **18.** La masse **16** est donc ramenée vers sa hauteur prédéterminée **A.**

Conformément à l'invention, après l'impact de la masse **16** sur le sol **9,** on acquiert un nuage de points à l'aide d'un scanner laser **30** afin d'obtenir une image radar d'au moins l'empreinte **E** de la masse dans le sol. Dans cet exemple non limitatif, le scanner laser **30** est monté sur le mât **14.** Dans cet exemple, l'image radar est acquise lors de la remontée de la masse **16** et plus précisément après que la masse **16** est sortie du champ de vision du scanner laser **30.**

Après que la masse **16** est revenue à sa hauteur prédéterminée **A,** on réalise un second cycle de pilonnage identique à celui qui vient d'être décrit. On pilonne donc à nouveau la même zone d'impact (Z) précitée.

L'ensemble des cycles de pilonnage réalisés sur la même zone d'impact **Z** constitue une séquence de pilonnage. Après la séquence de pilonnage, l'opérateur déplace la machine **10** afin d'amener la masse **16** au droit d'une autre zone d'impact afin de réaliser la séquence de pilonnage suivante, et ainsi de suite.

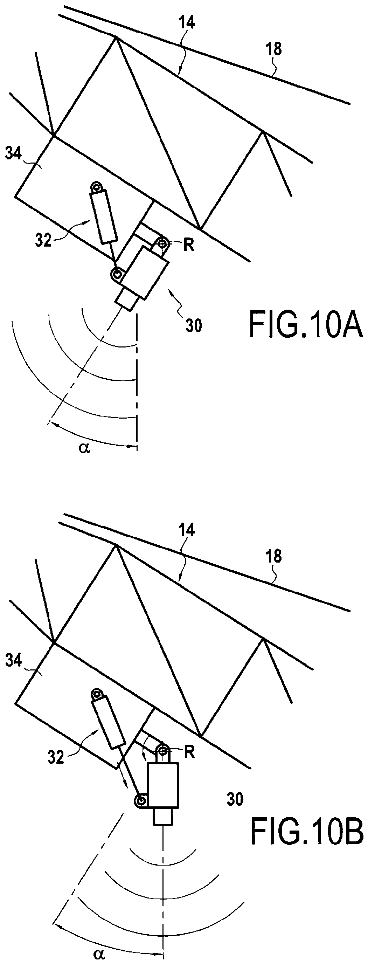

Comme on le constate sur les figures **10A** et **10B**, le scanner laser **30** est monté rotatif au mât **14** autour d'un axe de rotation **R** qui, dans cet exemple, est sensiblement horizontal. Le pivotement du scanner laser **30** autour de l'axe de rotation **R** est réalisé grâce à un vérin **32** fixé au mât **14**, d'une part, et au scanner laser **30**, d'autre part.

L"actionnement du vérin **32** a pour effet de faire pivoter le scanner laser **30** sur une amplitude **a,** de l'ordre de 70 degrés.

Dans cet exemple, le scanner laser est un scanner de type LIDAR bidimensionnel. Le pivotement du scanner laser **30** autour de l'axe de rotation **R** permet de réaliser un balayage dans un plan vertical, grâce à quoi on acquiert une image radar tridimensionnelle.

Conformément à l'invention, on détermine au moins une donnée caractéristique du compactage du sol **9** à partir d'au moins une des images radar obtenue à l'issue des cycles de pilonnage.

Dans cet exemple, on détermine une première donnée caractéristique du compactage du sol et une deuxième donnée caractéristique du compactage du sol à l'issue de chaque cycle de pilonnage.

Sans sortir du cadre de la présente invention, on pourrait déterminer une seule donnée caractéristique du compactage du sol à l'issue de chaque cycle de pilonnage.

Dans cet exemple, la première donnée caractéristique du compactage du sol est le volume de l'empreinte **VE,** tandis que la deuxième caractéristique du compactage du sol est le volume de soulèvement **VS.**

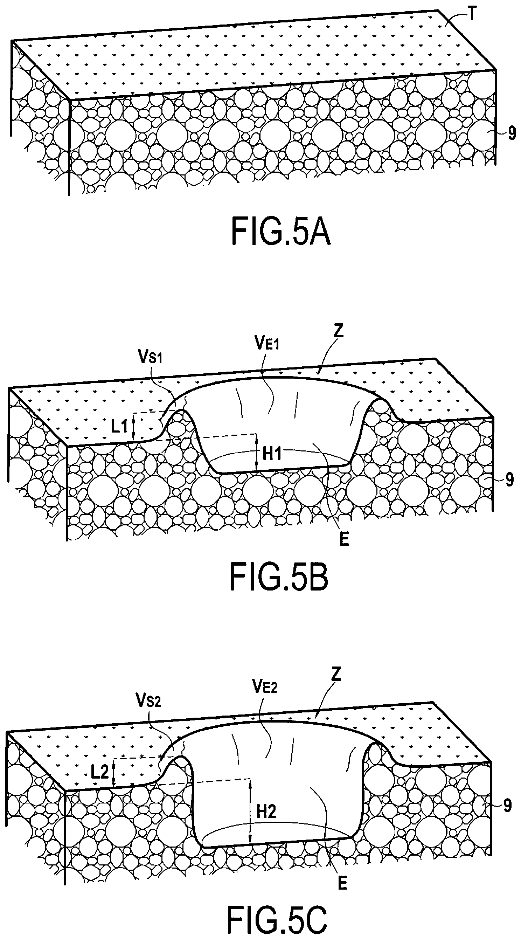

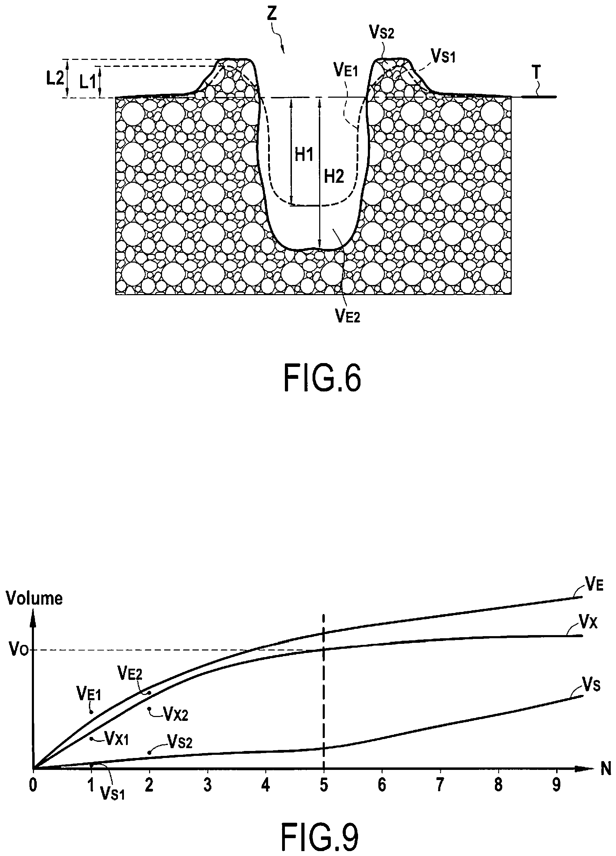

A l'aide des figures **5A, 5B, 5C** et **6,** on va décrire plus en détail ces première et deuxième données caractéristiques du compactage du sol qui sont déterminées à l'aide des images radar obtenues par le scanner laser **30.**

La figure **5A** représente l'état du sol avant les opérations de pilonnage. La référence **T** illustre la surface de référence.

La figure **5B** illustre la zone d'impact à l'issue du premier cycle de pilonnage, qui est également illustrée en figure **3.**

La figure **5** représente quant à elle la zone d'impact à l'issue du deuxième cycle de pilonnage.

Sur la figure **5B,** les références **VE1, H1, VS1, L1** représentent respectivement le volume de l'empreinte, la profondeur de l'empreinte, le volume de soulèvement et la hauteur de soulèvement à l'issue du premier cycle de pilonnage.

Les références **VE2, VS2, H2, L2** représentent respectivement le volume de l'empreinte, le volume de soulèvement, la profondeur de l'empreinte et la hauteur de soulèvement à l'issue du deuxième cycle de pilonnage.

L'évolution au cours des premier et deuxième cycles de pilonnage de ces différentes valeurs est schématisé sur la figure **6** qui illustre le profil de l'empreinte en coupe transversale dans un plan vertical.

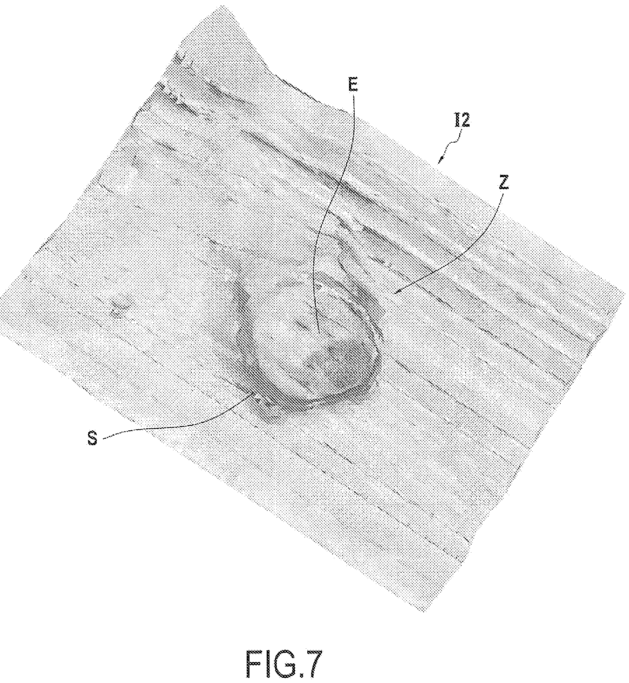

Sur la figure **7,** on a illustré une image radar **I2** obtenue à l'issue du deuxième cycle de pilonnage.

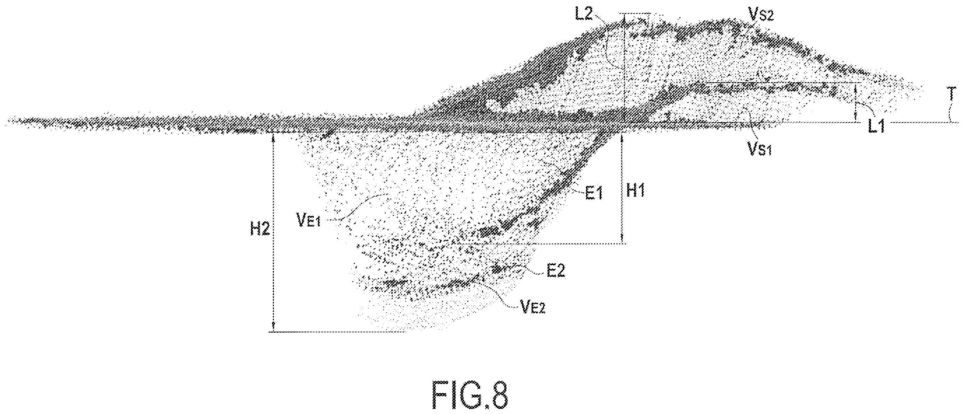

En figure **8,** on a illustré un nuage de points provenant des images radar obtenues à l'issue des premier et deuxième cycles de pilonnage. Ce nuage de points permet ensuite par des algorithmes connus par ailleurs, de déterminer le volume **VE1** de l'empreinte **E,** la profondeur **H1** de l'empreinte **E,** le volume de soulèvement **VS1** et la hauteur de soulèvement **L1** à l'issue du premier cycle de pilonnage, ainsi que le volume **VE2** de l'empreinte **E,** la profondeur **H2** de l'empreinte **E,** le volume de soulèvement **VS2** et la hauteur de soulèvement **L2** à l'issue du deuxième cycle de pilonnage.

Bien évidemment, le même principe s'applique pour réaliser un traitement mathématique pour des séquences de pilonnage comportant un nombre supérieur de cycles de pilonnage.

Selon l'invention, on détermine et on suit l'évolution des données caractéristiques de compactage du sol au cours des cycles de pilonnage.

Dans cet exemple, on s'intéressera plus particulièrement à l'évolution au cours des cycles de pilonnage des première et deuxième données caractéristiques de compactage du sol, constituées respectivement par le volume de l'empreinte **VE** et le volume de soulèvement **VS.** L'évolution de ces première et deuxième données caractéristique est illustrée sur la courbe de la figure **9**, où **N** correspond au nombre de cycles.

Dans le mode de mise en oeuvre décrit ici, on détermine en outre une valeur caractéristique du compactage du sol **VX** à partir des premières données caractéristiques du compactage du sol **VE, VS.** Dans cet exemple, la valeur caractéristique du compactage du sol **VX** est déterminée à partir de la différence entre les première et deuxième données caractéristiques du compactage du sol, c'est-à-dire à partir de la différence entre le volume de l'empreinte **VE** et le volume de soulèvement du sol **VS** autour de l'empreinte **E.**

On a donc :

$$VX = VE - VS.$$

Cette valeur caractéristique du compactage du sol **VX** est appelée volume effectif.

Conformément à l'invention, on détermine et on suit l'évolution de la valeur caractéristique du compactage du sol **VX** au cours des cycles de pilonnage.

La figure **9** illustre également l'évolution du volume effectif **VX** au cours des **N** cycles de pilonnage.

Dans cet exemple, on stoppe la répétition des cycles de pilonnage lorsque leur caractéristique du compactage du sol **VX** a atteint un seuil de compactage prédéterminé **V₀**. Dans cet exemple, le seuil de compactage est donc un volume.

Sans sortir du cadre de la présente invention, le seuil de compactage prédéterminé pourrait être une constante, la séquence de pilonnage étant stoppée lorsque la pente de la courbe du volume effectif **VX** est inférieure à ladite constante.

En effet, on constate qu'à partir d'un certain nombre de cycles, la courbe du volume effectif présente un plateau qui traduit le fait que la densité du sol n'augmente quasiment plus malgré la poursuite des cycles de pilonnage.

En d'autres termes, on stoppe les cycles de pilonnage lorsque le volume effectif **VX** a atteint ce plateau. Dans cet exemple non limitatif, on a schématisé l'arrêt de la séquence de pilonnage à l'issue du cinquième cycle de pilonnage. Bien évidemment, le nombre de cycles de pilonnage dépendra de certains paramètres comme la nature du terrain à compacter, de la masse **16,** de la hauteur prédéterminée **A,** etc...

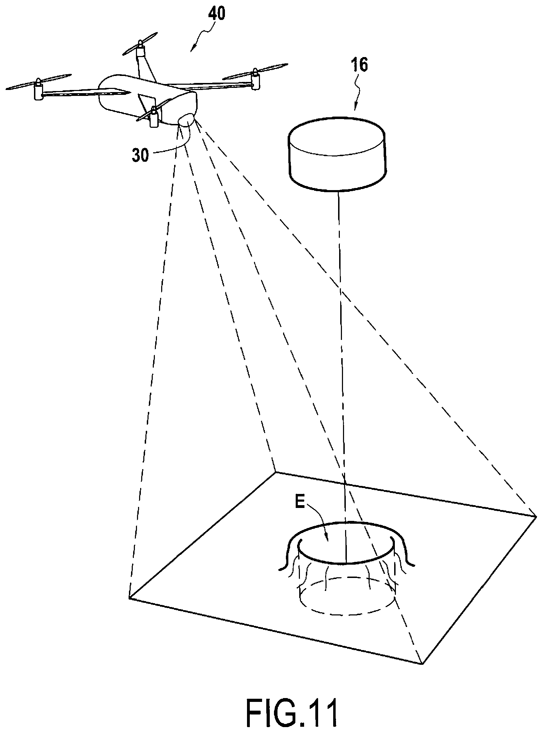

En figure **11,** on a illustré un deuxième mode de réalisation de l'invention dans lequel, le scanner laser **30** est monté sur un drone **40.**

Le drone **40** est également équipé d'un dispositif pour transmettre les images radar, prises à l'issue de chaque cycle, vers une unité de calcul (non illustrée ici).

**Revendications**

1. Procédé de compactage d'un sol, dans lequel :

   a) on réalise plusieurs fois un cycle de pilonnage d'une zone d'impact (Z) du sol (S) au cours duquel :

   on laisse tomber une masse (16) sur la zone d'impact (Z) depuis une hauteur prédéterminée (A) ; et
   après l'impact de la masse (16) sur la zone d'impact (Z), on acquiert un nuage de points à l'aide d'un scanner laser (30) afin d'obtenir une image radar d'au moins l'empreinte (E) de la masse dans le sol, **caractérisé en ce que**:
   b) on détermine au moins une donnée caractéristique du compactage du sol (VE1, VE2, VS1, VS2, H1, H2, L1, L2) à partir d'au moins une des images radar de l'empreinte obtenues à l'issue des cycles de pilonnage.

2. Procédé selon la revendication **1,** dans lequel on détermine ladite au moins une donnée caractéristique du compactage du sol à l'issue de chaque cycle de pilonnage.

3. Procédé selon la revendication **2,** dans lequel on détermine l'évolution de ladite au moins une donnée caractéristique du compactage du sol au cours des cycles de pilonnage.

4. Procédé selon l'une quelconque des revendications précédentes, dans lequel ladite au moins une donnée caractéristique du compactage du sol est une profondeur (H1, H2) de l'empreinte (E).

5. Procédé selon l'une quelconque des revendications précédentes, dans lequel ladite au moins une donnée caractéristique du compactage du sol est le volume de soulèvement du sol (VS1, VS2) autour de l'empreinte.

6. Procédé selon l'une quelconque des revendications précédentes, dans lequel ladite au moins une donnée caractéristique du compactage du sol est le volume de l'empreinte (VE1, VE2).

7. Procédé selon l'une quelconque des revendications précédentes, dans lequel on stoppe la répétition des cycles de pilonnage lorsque ladite au moins une donnée caractéristique du compactage du sol a atteint un seuil prédéterminé.

8. Procédé selon l'une quelconque des revendications précédentes, dans lequel on détermine, à l'issue de chaque cycle de pilonnage, une première donnée caractéristique du compactage du sol (VE1, VE2) et une deuxième donnée caractéristique du compactage du sol (VS1, VS2).

9. Procédé selon la revendication **8,** dans lequel on détermine une valeur caractéristique du compactage du sol (VX1, VX2) à partir des première et deuxième données caractéristiques du compactage du sol.

10. Procédé selon la revendication **9,** dans lequel on détermine l'évolution, au cours des cycles de pilonnage, de la valeur caractéristique du compactage du sol (VX).

11. Procédé selon la revendication **9** ou **10,** dans lequel on stoppe la répétition des cycles de pilonnage lorsque la valeur caractéristique du compactage du sol (VX) a atteint un seuil de compactage prédéterminé (VS₀).

12. Procédé selon l'une quelconque des revendications **9** à **11,** dans lequel la valeur caractéristique du compactage du sol est la différence entre la première donnée caractéristique du compactage du sol et la deuxième donnée caractéristique du compactage du sol.

13. Procédé selon l'une quelconque des revendications **8 à 12,** dans lequel la première donnée caractéristique du compactage du sol est le volume de l'empreinte (VE), tandis que la deuxième donnée caractéristique du compactage du sol est le volume de soulèvement du sol (VS) autour de l'empreinte (E).

14. Procédé selon l'une quelconque des revendications précédentes, dans lequel la hauteur prédéterminée est déterminée à partir de ladite au moins une donnée caractéristique du compactage du sol.

15. Procédé selon l'une quelconque des revendications précédentes, dans lequel, lors de l'étape a), l'acquisition de l'image radar est réalisée lors de la remontée de la masse ou lorsque la masse a atteint la hauteur prédéterminée.

16. Procédé selon l'une quelconque des revendications précédentes, dans lequel l'image radar (I2) est une image radar tridimensionnelle.

17. Machine (10) pour la mise en oeuvre du procédé selon l'une quelconque des revendications précédentes, qui comporte un mât, une masse suspendue au mât, un dispositif pour remonter (25) la masse (16) après l'impact de la masse sur une zone d'impact du sol, **caractérisé par** un scanner laser configuré pour acquérir un nuage de points afin d'obtenir une image radar d'au moins la zone d'impact.

18. Machine (10) selon la revendication **17, caractérisée en ce que** le scanner laser est monté sur le mât (14).

19. Machine (10) selon la revendication **18, caractérisée en ce que** le scanner laser est un scanner 2D (30) monté pivotant par rapport au mât selon un axe de rotation horizontal.

20. Machine (10) selon la revendication **17, caractérisée en ce qu'**elle comporte en outre un drone (40) équipé du scanner laser (30).

**Patentansprüche**

1. Verfahren zum Verdichten eines Bodens, bei dem:

a) mehrmals ein Zyklus zum Stampfen eines Aufprallbereiches (Z) des Bodens (S) durchgeführt wird, im Laufe dessen:

eine Masse (16) aus einer vorbestimmten Höhe (A) auf den Aufprallbereich (Z) fallen gelassen wird, und
nach dem Aufprall der Masse (16) auf den Aufprallbereich (Z) mit Hilfe eines Laserscanners (30) eine Punktwolke erfasst wird, um ein Radarbild von wenigstens dem Eindruck (E) der Masse in dem Boden zu erhalten,

**dadurch gekennzeichnet, dass**
b) wenigstens eine für die Verdichtung des Bodens charakteristische Angabe (VE1, VE2, VS1, VS2, H1, H2, L1, L2) anhand wenigstens eines der am Ende der Stampfzyklen gewonnenen Radarbilder bestimmt wird.

2. Verfahren nach Anspruch 1, bei dem die wenigstens eine für die Verdichtung des Bodens charakteristische Angabe am Ende eines jeden Stampfzyklus bestimmt wird.

3. Verfahren nach Anspruch 2, bei dem die Entwicklung der wenigstens eine für die Verdichtung des Bodens charakteristische Angabe im Laufe der Stampfzyklen bestimmt wird.

4. Verfahren nach einem der vorhergehenden Ansprüche, bei dem die wenigstens eine für die Verdichtung des Bodens charakteristische Angabe eine Tiefe (H1, H2) des Eindrucks (E) ist.

5. Verfahren nach einem der vorhergehenden Ansprüche, bei dem die wenigstens eine für die Verdichtung des Bodens charakteristische Angabe das Bodenerhebungsvolumen (VS1, VS2) um den Eindruck herum ist.

6. Verfahren nach einem der vorhergehenden Ansprüche, bei dem die wenigstens eine für die Verdichtung des Bodens charakteristische Angabe das Volumen des Eindrucks (VE1, VE2) ist.

7. Verfahren nach einem der vorhergehenden Ansprüche, bei dem die Wiederholung der Stampfzyklen gestoppt wird, wenn die wenigstens eine für die Verdichtung des Bodens charakteristische Angabe einen vorbestimmten Schwellwert erreicht hat.

8. Verfahren nach einem der vorhergehenden Ansprüche, bei dem am Ende eines jeden Stampfzyklus eine für die Verdichtung des Bodens erste charakteristische Angabe (VE1, VE2) und eine für die Verdichtung des Bodens charakteristische zweite Angabe (VS1, VS2) bestimmt wird.

9. Verfahren nach Anspruch 8, bei dem anhand der für die Verdichtung des Bodens charakteristischen ersten und zweiten Angaben ein Kennwert der Verdichtung des Bodens (VX1, VX2) ermittelt wird.

10. Verfahren nach Anspruch 9, bei dem die Entwicklung des Kennwerts der Verdichtung des Bodens (VX) im Laufe der Stampfzyklen bestimmt wird.

**11.** Verfahren nach Anspruch 9 oder 10, bei dem die Wiederholung der Stampfzyklen gestoppt wird, wenn der Kennwert der Verdichtung des Bodens (VX) einen vorbestimmten Verdichtungsschwellwert (VS$_0$) erreicht hat.

**12.** Verfahren nach einem der Ansprüche 9 bis 11, bei dem der Kennwert der Verdichtung des Bodens die Differenz zwischen der für die Verdichtung des Bodens ersten charakteristischen Angabe und der für die Verdichtung des Bodens zweiten charakteristischen Angabe ist.

**13.** Verfahren nach einem der Ansprüche 8 bis 12, bei dem die für die Verdichtung des Bodens erste charakteristische Angabe das Volumen des Eindrucks (VE) ist, während die für die Verdichtung des Bodens zweite charakteristische Angabe das Bodenerhebungsvolumen (VS) um den Eindruck (E) herum ist.

**14.** Verfahren nach einem der vorhergehenden Ansprüche, bei dem die vorbestimmte Höhe anhand der wenigstens einen für die Verdichtung des Bodens charakteristischen Angabe bestimmt wird.

**15.** Verfahren nach einem der vorhergehenden Ansprüche, bei dem während des Schrittes a) die Aufnahme des Radarbildes während des Hochfahrens der Masse oder dann, wenn die Masse die vorbestimmte Höhe erreicht hat, vollzogen wird.

**16.** Verfahren nach einem der vorhergehenden Ansprüche, bei dem das Radarbild (I2) ein dreidimensionales Radarbild ist.

**17.** Maschine (10) zur Durchführung des Verfahrens nach einem der vorhergehenden Ansprüche, die einen Mast, eine an dem Mast aufgehängte Masse, eine Vorrichtung zum Hochfahren (25) der Masse (16) nach dem Aufprall der Masse auf einem Aufprallbereich des Bodens umfasst, **gekennzeichnet durch** einen Laserscanner, der dazu ausgelegt ist, eine Punktwolke zu erfassen, um ein Radarbild wenigstens des Aufprallbereichs zu erhalten.

**18.** Maschine (10) nach Anspruch 17, **dadurch gekennzeichnet, dass** der Laserscanner an dem Mast (14) angebracht ist.

**19.** Maschine (10) nach Anspruch 18, **dadurch gekennzeichnet, dass** der Laserscanner ein relativ zu dem Mast entlang einer horizontalen Drehachse schwenkbar gelagerter 2D-Scanner (30) ist.

**20.** Maschine (10) nach Anspruch 17, **dadurch gekennzeichnet, dass** sie ferner eine mit dem Laserscanner (30) ausgestattete Drohne (40) umfasst.

**Claims**

**1.** A method for compacting a soil, wherein:

a) a ramming cycle is carried out several times on an impact area (Z) of the soil (S) during which:

a mass (16) is dropped on the impact area (Z) from a predetermined height (A); and after the impact of the mass (16) on the impact area (Z), a point cloud is acquired using a laser scanner (30) in order to obtain a radar image of at least the footprint (E) of the mass in the soil, **characterized in that**:
b) at least one characteristic data of the soil compaction (VE1, VE2, VS1, VS2, H1, H2, L1, L2) is determined from at least one of the radar images of the footprint obtained at the end of the ramming cycles.

**2.** The method according to claim **1,** wherein said at least one characteristic data of the soil compaction is determined at the end of each ramming cycle.

**3.** The method according to claim **2,** wherein the evolution of said at least one characteristic data of the soil compaction is determined during the ramming cycles.

**4.** The method according to any one of the preceding claims, wherein said at least one characteristic data of the soil compaction is a depth (H1, H2) of the footprint (E).

**5.** The method according to any one of the preceding claims, wherein said at least one characteristic data of the soil compaction is the volume of lifting of the soil (VS1, VS2) around the footprint.

**6.** The method according to any one of the preceding claims, wherein said at least one characteristic data of the soil compaction is the volume of the footprint (VE1, VE2).

**7.** The method according to any one of the preceding claims, wherein the repetition of the ramming cycles is stopped when said at least one characteristic data of the soil compaction has reached a predetermined threshold.

**8.** The method according to any one of the preceding claims, wherein a first characteristic data of the soil compaction (VE1, VE2) and a second characteristic data of the soil compaction (VS1, VS2) are determined at the end of each ramming cycle.

**9.** The method according to claim **8,** wherein a characteristic value of the soil compaction (VX1, VX2) is determined from the first and second characteristic data of the soil compaction.

10. The method according to claim **9,** wherein the evolution, during the ramming cycles, of the characteristic value of the soil compaction (VX) is determined.

11. The method according to claim **9** or **10,** wherein the repetition of the ramming cycles is stopped when the characteristic value of the soil compaction (VX) has reached a predetermined compaction threshold ($VS_0$).

12. The method according to any one of claims **9** to **11,** wherein the characteristic value of the soil compaction is the difference between the first characteristic data of the soil compaction and the second characteristic data of the soil compaction.

13. The method according to any one of claims **8** to **12,** wherein the first characteristic data of the soil compaction is the volume of the footprint (VE), while the second characteristic data of the soil compaction is the volume of lifting of the soil (VS) around the footprint (E).

14. The method according to any one of the preceding claims, wherein the predetermined height is determined from said at least one characteristic data of the soil compaction.

15. The method according to any one of the preceding claims, wherein, during step a), the acquisition of the radar image is carried out during the raising of the mass or when the mass has reached the predetermined height.

16. The method according to any one of the preceding claims, wherein the radar image (I2) is a three-dimensional radar image.

17. A machine (10) for the implementation of the method according to any one of the preceding claims, which includes a mast, a mass suspended from the mast, a device for raising (25) the mass (16) after the impact of the mass on a soil impact area, **characterized by** a laser scanner configured to acquire a point cloud in order to obtain a radar image of at least the impact area.

18. The machine (10) according to claim **17, characterized in that** the laser scanner is mounted on the mast (14).

19. The machine (10) according to claim **18, characterized in that** the laser scanner is a 2D scanner (30) pivotally mounted relative to the mast along a horizontal axis of rotation.

20. The machine (10) according to claim **17, characterized in that** it further includes a drone (40) equipped with the laser scanner (30).

FIG.1

FIG.2

FIG.3

FIG.4

FIG.5A

FIG.5B

FIG.5C

FIG.6

FIG.9

FIG.7

FIG.8

EP 3 728 740 B1

FIG.10A

FIG.10B

**FIG.11**

## RÉFÉRENCES CITÉES DANS LA DESCRIPTION

**Documents brevets cités dans la description**

- FR 2629846

- CN 107237310 A